# EUROPÄISCHE PATENTSCHRIFT

(11) **EP 3 213 890 B1**
(45) Veröffentlichungstag und Bekanntmachung des Hinweises auf die Patenterteilung: **02.10.2024**
(21) Anmeldenummer: 16158067.5
(22) Anmeldetag: 01.03.2016
(51) Int. Cl.: B26D 3/16, B23D 21/00

(54) **SCHÄL- UND SCHNEIDWERKZEUG**
PEELING AND CUTTING TOOL
OUTIL DE COUPE ET D'ECROUTAGE

(43) Veröffentlichungstag der Anmeldung: 06.09.2017
(73) Patentinhaber: Georg Fischer Rohrleitungssysteme AG, 8201 Schaffhausen (CH)
(72) Erfinder: Hunnekuhl, Jörg, 79798 Jestetten (DE); Rösch, Jürgen, 79853 Lenzkirch (DE); Breyer, Markus, 78315 Radolfzell (DE)
(74) Vertreter: Fenner, Seraina

(56) Entgegenhaltungen:
- GB-A- 1 520 687
- GB-A- 783 705
- US-A- 1 756 171
- US-A- 4 364 290

## Beschreibung

Die Erfindung betrifft ein Schäl- und Schneidwerkzeug zum Abisolieren und Schälen von vorisolierten Rohrenden insbesondere des Aussendurchmessers des Mediumrohres und das Verfahren beinhaltend eine Spanneinheit zur zentrischen Aufnahme des Rohrendes, eine Führungseinheit zur Vorschubbewegung der Abisolier- und Schäleinheit zum Abtrennen des Aussenrohres und der Isolationsschicht, wobei sich die Führungseinheit durch die Spanneinheit erstreckt, eine Schneideinheit, einen Träger und eine Abisolier- und Schäleinheit.

Es handelt sich hierbei um ein Werkzeug und ein damit verbundenes Verfahren das für vorisolierte Rohrleitungen eingesetzt wird. Solche vorisolierten Rohrleitungen werden dort eingesetzt wo es eine gute Isolation des Mediums gegenüber den Umgebungsbedingungen benötigt, bspw. für den Transport von Kälteträgermedien in Kühlsystemen. Um das Medium transportierende Innenrohr bzw. das Mediumsrohr vorzugsweise aus Kunststoff ist eine Isolationsschicht vorzugweise aus geschäumtem Kunststoff angeordnet, wobei die Isolationsschicht von einer Aussenhaut oder einem Aussenrohr umgeben ist, welche vorzugsweise aus Kunststoff aber auch aus einem Metall gebildet sind und dem Schutz der Isolationsschicht dient. Solche Rohrleitungen müssen an ihren Enden abisoliert und das Mediumsrohr an der äusseren Mantelfläche geschält werden um mit Fittings oder weiteren Rohren verbunden werden zu können, da die Verbindung über das Mediumsrohr erfolgt um die Dichtheit zu gewährleisten.

Aus dem Stand der Technik sind solche Werkzeuge, die Schälen und Schneiden nur für Rohre bekannt, die zwar mehrschichtig sind aber davon keine Isolationsschicht aufweisen. So ein Werkzeug ist aus der GB1520687A bekannt.

Die DE 295 16 513 U1 offenbart ein solches Werkzeug, wobei sich dieses nur für Rohre mit mehreren Mantelschichten aber nicht für Isolationsschichten eignet. Vorisolierte Rohre wurden bisher in der Regel manuell, ohne entsprechendes Werkzeug, welches alle Schritte wie Abisolieren und Schälen des Mediumsrohres beinhaltet, abisoliert und für die Verbindung präpariert. Somit wurde zuerst die Einstecktiefe ausgemessen um zu bestimmen, wie weit die Isolationsschicht und das Aussenrohr entfernt werden müssen. Dann wurde das Aussenrohr abgetrennt und danach die Isolationsschicht. Um eine gute Oberfläche für die Verschweissung des freigelegten Mediumsrohres mit bspw. einem daran zu verschweissenden Fitting zu gewährleisten, musste noch die Aussenfläche des Mediumrohres geschält werden. Neben dem Nachteil der vielen einzelnen Schritte die durchzuführen sind, besteht auch der grosse Nachteil einer hohen Fehlerquelle. Durch das manuelle Abmessen der Einstecktiefe die abisoliert werden muss, ist es gut möglich, dass dabei ein Fehler erfolgt, wie auch beim Entfernen der Isolationsschicht, wodurch auch das Mediumsrohr ungewollt beschädigt werden kann.

Es ist Aufgabe der Erfindung ein Schäl- und Schneidwerkzeug und ein damit verbundenes Verfahren vorzuschlagen, welches ein einfaches und schnelles Abisolieren und Schälen von vorisolierten Rohrleitungsenden vorsieht, sowie das Beschädigen des Mediumrohres und weitere mögliche Fehlerquellen des manuellen Vorgangs zu elimieren. Zudem soll das Werkzeug auf verschiedene Rohrdurchmesser adaptierbar sein.

Diese Aufgabe wird erfindungsgemäss mit einem Schäl-und Schneidwerkzeug mit den Merkmalen des Anspruchs 1 gelöst.

Das Schäl- und Schneiwerkzeug zum Abisolieren und Schälen von vorisolierten Rohrenden insbesondere des Aussendurchmessers bzw. die Aussenmantelfläche des Mediumrohres beinhaltet eine Spanneinheit zur zentirischen Aufnahme des Rohrendes. Die Spanneinheit wird in das Mediumsrohr eingeführt wodurch das Schäl- und Schneidwerkezug konzentrisch zum Mediumsrohr aufgenommen wird um auch den Abisolier-, Schäl- und Scheidvorgang konzentrisch zum Mediumsrohr durchführen zu können. Die Aufnahme bzw. das Spannen über das Mediumsrohr ist wichtig, da weder die Isolationsschicht noch das Aussenrohr konzentrisch zum Mediumsrohr angeordnet sein müssen. Aufgrund der Herstellung kann es hierzu einer achsial versetzten Anordnung des Mediumrohres gegenüber der Isolationsschicht sowie auch dem Aussenrohr kommen, wodurch eine Befestigung des Werkzeugs am Aussenumfang des vorisolierten Rohres zu Beschädigungen am Mediumsrohr führen könnte.

Des Weiteren weist das Schäl- und Schneidwerkzeug eine Führungseinheit auf, die unter anderem der Vorschubbewegung der Abisolier- und Schäleinheit dient. Zudem erstreckt sich die Führungseinheit durch die Spanneinheit.

Die Führungseinheit weist einen Vorschubbereich auf, der dem Abisolieren und Schälen des Rohrendes dient. Vorzugsweise ist der Vorschubbereich der Führungseinheit als Spindel bzw. Spindelbüchse ausgebildet. Durch die Rotation des Trägers in dem eine Spindelmutter angeordnet ist, wird die Vorschubbewegung entlang des Vorschubbereichs erzielt und die Abisolier- und Schäleinheit entsprechend vorangeschoben. Zudem weist die Führungseinheit einen Spannbereich auf, der dem Spannen der Spanneinheit dient.

Das Schäl- und Schneidwerkzeug weist zudem eine Schneideinheit zum Abtrennen des Aussenrohres und der Isolationsschicht auf. Der Träger des Werkzeugs verbindet die Einheiten miteinander. Als wesentliche Einheit weist das Schäl- und Schneidwerkzeug eine Abisolier- und Schäleinheit auf. Die Abisolier- und Schäleinheit ist am Träger angeordnet bzw. an der Spindelmutter, die im Träger angeordnet ist und auf dem Vorschubbereich bzw. der Spindel der Führungseinheit bewegbar ist. Um das vorisolierte Rohrende gleichzeitig von der Isolationsschicht zu trennen und die Aussenmantelfläche des Mediumsrohrs zu Schälen weist die Abisolier- und Schäleinheit ein Abisolierelement auf, mittels dem die Isolationsschicht von der äusseren Mantelfläche des Mediumsrohres abgetrennt wird. Damit kein separater Schäldurchgang erfolgen muss um die Aussenmantelfläche des Mediumrohres zu schälen weist die Abisolier- und Schäleinheit auch ein Schälelement auf, wodurch im selben Vorgang neben dem Abisolieren auch das Schälen erfolgt. Indem der Träger mit Hilfe eines Handgriffs um das Führungselement bzw. den Vorschubbereich rotiert wird, aufgrund der im Träger angeordneten Spindelmutter und der Spindel bzw. Spindelbüchse im Vorschubbereich der Führungseinheit, bewegt sich der Träger mit der daran bzw. auf der Spindelmutter angeordneten Abisolier- und Schäleinheit in die Tiefe des zu schälenden Rohres hinein. Vorzugsweise ist das Schälelement als Schälklinge und das Abisolierelement als Abisolierkontur ausgebildet. Es hat sich als vorteilhaft erwiesen, wenn das Schälelement bzw. die Schälklinge und das Abisolierelement bzw. die Abisolierkontur an einer Klinge angeordnet sind, vorzugsweise an derselben Klinge. Die Klinge ist vorzugsweise als längliche Platte ausgebildet mittels der in die Tiefe der Isolationsschicht vorgedrungen werden kann. Die Klinge zeichnet sich dadurch aus, dass die Abisolierkontur an Bereichen des Umfangs der Klinge angeordnet ist und vorzugsweise als teilumlaufende Fase ausgebildet ist und die Schälklinge an einer Kante einer Ausnahme, die in der Klinge vorliegt. Die Breite der Ausnahme und somit auch die Breite der Schälklinge sind vorzugsweise gleich oder breiter als die Steigung der Spindel im Vorschubbereich der Führungseinheit.

Die Klinge sticht durch die erzeugte Vorschubbewegung in die Isolationsschicht ein knapp über dem Aussendurchmesser des Mediumsrohres. Mittels der Isolationsschicht wird die Klinge auf die Aussenmantelfläche des Mediumrohres gedrückt, die Isolationsschicht bringt eine leichte Anpresskraft auf die Klinge und wirkt dennoch federnd, wodurch die Klinge nicht starr auf den Aussendurchmesser des Mediumrohrs gepresst wird sondern mit einer Vorspannung was das Abisolieren und das Schälen positiv unterstützt.

Die Klinge der Abisolier- und Schäleinheit ist an einem Klingenhalter befestigt. Die Abisolier- und Schäleinheit ist dimensionsabhängig, das heisst, der Klingenhalter ist unterschiedlich breit ausgebildet da die Anschlagfläche des Klingenhalters die mögliche Einstecktiefe der Klinge in das abzuisolierende Rohr definiert. Die Klinge ist am Klingenhalter befestigt und ragt parallel zur Spanneinheit bis hin zum Rollmesser der Schneideinheit bzw. das Schälelement der Klinge befindet sich direkt unterhalb des Rollmessers der Schneideinheit. Dadurch ist gewährleistet, dass das Mediumsrohr soweit hin abisoliert und geschält ist wo auch die Isolationsschicht und das Aussenrohr durch das Rollmesser abgetrennt werden. Des Weiteren weist der Klingenhalter bei grösseren Rohrdimensionen einen grösseren Durchmesser aufweist, da dieser die Einstechposition der Klinge knapp über dem Aussendurchmesser des Mediumrohrs vorgibt.

Nachdem Vorgang des Trennens der Isolation von der Aussenoberfläche des Mediumrohres und des Schälens erfolgt das Abschneiden der abisolierten Isolation vom übrigen Rohr bzw. dessen Isolation und dem Aussenrohr. Dies erfolgt mittels der Schneideinheit. Die Schneideinheit ist am Träger angeordnet und höhen- bzw. durchmesserverstellbar. Da wie bereits erwähnt das Schäl- und Schneidwerkzeug für unterschiedliche Rohrdimensionen einsetzbar ist, ist die Schneideinheit am Träger verstellbar. Eine bevorzugte Positionsverstellung der Schneideinheit ist durch Positionsbohrungen im Träger und einem Sicherungsstift der die Schneideinheit an der entsprechenden Position positionieren lässt, gegeben. Um das Abschneiden des Aussenrohres und der Isolationsschicht durchzuführen, muss die Schneideinheit um das Rohrende bzw. die Führungseinheit bzw. die Spanneinheit rotieren. Dies wird dadurch erreicht, dass der Träger eine Lagerung aufweist bzw. im Träger ein Lager vorzugsweise Kugellager angeordnet sind, die wiederum auf der Spindelmutter angeordnet sind und sich dadurch der Träger um die Spindelmutter bzw. um die Führungseinheit rotieren lässt wenn die Lagerung durch das Lösen der Entriegelungseinheit entriegelt wurde.

Da die Rotation des Trägers aber während des Abisolier- und Schälvorgangs nicht gewünscht ist, sondern dort eine Vorschubbewegung des Trägers verlangt ist, wird diese Rotationsbewegung des Trägers mittels Entriegelungseinheit unterdrückt. Vorzugsweise ist die Entriegelungseinheit als selbstfedernder Stift ausgebildet, der im Lagerungsbereich des Trägers angeordnet ist und durch eine Bohrung bis in die Spindelmutter hineinragt und so das Rotieren des Trägers unterdrückt. Wird die Entriegelungseinheit durch hinausziehen des gefederten Stifts, speziell aus der Bohrung der Spindelmutter, wobei der gefederte Stift dennoch am Träger verbleibt, entriegelt, kann der Träger und demzufolge auch die Schneideinheit um die Führungseinheit, bzw. die Spanneinheit bzw. das Rohr gedreht werden und durch das an der Schneideinheit angeordnete Messer vorzugweise Rollmesser durch mehrere Umdrehungen abgeschnitten werden. Über eine Spindel kann die Schnitttiefe des Rollmessers zugestellt werden, wobei diese Zustellung nur bis zum Mediumsrohr möglich ist, um dieses sicher nicht zu tangieren.

Damit während des Abisolier- und Schälvorgangs das Rollmesser vom Aussenrohr des Rohrendes etwas beabstandet ist und diese Distanz dennoch nicht mit der Spindel überbrückt werden muss, weist die Schneideinheit eine Art Schnellvorschub auf, indem die Spindel in einem Schlitten angeordnet ist, der durch Hinunterdrücken des Knaufs den Schlitten mit darin angeordneter Spindel und dem daran angeordneten Rollmesser in die Ausgangslage zum Schneiden bringt.

Das Schäl- und Schneidwerkzeug weist ein rohrdimensionsbezogenes Kodierungssystem auf, wobei das Kodierungssystem zum Vermeiden von Fehlern bezüglich falsch eingestelltem Schäl- und Schneidwerkzeug dient. Mittels des Kodierungssystems ist es nicht möglich die Schneideinheit auf ein kleiner dimensioniertes Rohr bspw. 32mm einzustellen wenn am Werkzeug eine Abisolier-und Schäleinheit für ein 90mm Mediumsrohr befestigt ist. Die Einstellung der Schneideinheit erfolgt bevorzugt über die Positionsbohrungen. Durch die Anordnung eines Dimensionsbegrenzungsbügels an der Schneideinheit verstellt sich dieser ebenfalls mit und verhindert dadurch ein Tieferstellen der Schneideinheit als es durch die Abisolier- und Schäleinheit zugelassen wird. Zudem wird durch das Kodierungssystem auch verunmöglicht, dass das Rollmesser die Aussenmantelfläche des Mediumrohrs tangiert bzw. verletzt

Um ein optimales Spannen der Rohrenden zu gewährleisten wird wie bereits erwähnt das Rohrende über den Innendurchmesser des Mediumrohres gespannt. Die Spanneinheit weist hierzu Spannbacken auf, vorzugsweise drei. Zudem weist die Spanneinheit Spannkonen auf, die koaxial zueinander angeordnet sind und zwischen denen die Spannbacken angeordnet sind. Wie bereits erwähnt ragt durch die Spanneinheit die Führungseinheit hindurch bzw. der Spannbereich der Führungseinheit. Dieser weist ein Gewinde auf der Spannachse auf, auf der die Spannkonen angeordnet sind und durch das Zusammenschrauben die Spannkonen gegenseitig auf sich zubewegen und dadurch die dazwischen angeordneten Spannbacken nach aussen drücken und so von innen das Rohrende spannen. Um den unterschiedlichen Rohrdimensionen Genüge zu tun kann auf die am Schäl- und Schneidwerkzeug bzw. an der Spanneinheit angeordneten Spannbacken noch dimensionsabhängige Backen adaptiert werden.

Eine bevorzugte Ausgestaltung der Spannkonen liegt darin, dass die Form eines Spannkons aus mindestens zwei Konussegmente gebildet wird. Vorzugsweise erstrecken sich drei Konussegmente über den Spannkonus, wobei ihre Mittelachsen parallel verlaufen und ihre Mittelpunkte der Grundfläche regemässig auf einen fiktiven Kreis angeordnet sind. Diese Form eines Spannkonus ermöglicht eine bessere Auflage für die Spannbacken. Dadurch liegt jede der drei Spannbacken über eine Umfangslinie am jeweiligen Konsussegment auf und nicht wie bei einem normalen Konus wo die Spannbacken nur in einem Punkt aufliegen.

Das Verfahren zum Abisolieren und Schälen eines vorisolierten Rohrendes mittels erfindungsgemässen Schäl- und Schneidwerkzeug zeichnet sich dadurch aus, dass das Abisolieren und Schälen gleichzeitig bzw. während derselben Vorschubbewegung der Abisolier- und Schäleinheit erfolgt. Des Weiteren liegt ein grosser Vorteil darin, dass auch das Abschneiden des Aussenrohres wie auch der Isolationsschicht mit demselben Werkzeug erfolgt, wobei dies nach dem Abisolieren und Schälen erfolgt.

### Bezugszeichenliste

- 1: Schäl- und Schneidwerkzeug
- 2: Spanneinheit
- 3: Führungseinheit
- 4: Schneideinheit
- 5: Abisolier- und Schäleinheit
- 6: Träger
- 7: Schälelement
- 8: Abisolierelement
- 9: Klinge
- 10: Entriegelungseinheit
- 11: Kodierungssystem
- 12: Dimensionsbegrenzungsbügel
- 13: Spannbacken
- 14: Spannkonen
- 15: Konussegment
- 16: Vorschubbereich der Führungseinheit (Spindel)
- 17: Spannbereich der Führungseinheit
- 18: Lagerung
- 19: Spindelmutter
- 20: Handgriff
- 21: Klingenhalter
- 22: Positionsbohrungen
- 23: Rollmesser
- 24: Spindel
- 25: Schlitten
- 26: Knauf
- 27: Mediumsrohr
- 28: Arretierung
- 29: Durchmesserspezifische Backen
- 30: Spannachse
- 31: Halteelement
- 32: Anschlagfläche Klingenhalter
- 33: Isolationsschicht
- 34: Sicherungsstift
- 35: Lager
- 36: Aussenrohr

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine dreidimensionale Ansicht eines erfindungsgemässen Werkzeugs,
- Fig. 2: einen Längsschnitt eines erfindungsgemässen Werkzeugs,
- Fig. 3: eine Explosionsansicht der Führungseinheit und
- Fig. 4: eine dreidimensionale Ansicht eines erfindungsgemässen Werkzeugs mit eingespanntem Rohrende.

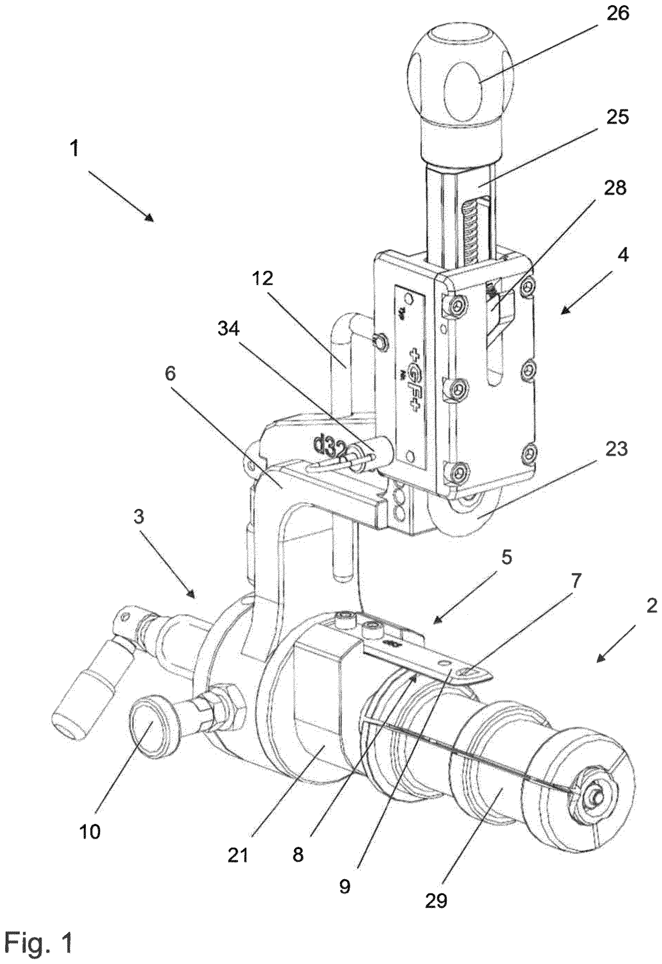

Fig. 1 zeigt eine dreidimensionale Ansicht eines erfindungsgemässen Schäl- und Schneidwerkzeug 1. Das Schäl- und Schneidwerkzeug 1 dient dem Abisolieren und Schälen von vorisolierten Rohrenden insbesondere des Mediumrohres 27. Dies dient dazu um das abisolierte Mediumsrohr 27 mit einem weiteren Rohr oder Fitting verbinden zu können um den abisolierten Bereich bzw. das blosse Mediumsrohr 27 in bspw. einen Fitting einzuschieben und diese dann bspw. durch Verschweissen miteinander dichtend zu verbinden. Vorzugsweise handelt es sich hierbei um Kunststoffrohre, das heisst, dass sowohl das Mediumsrohr 27 vorzugsweise aus Kunststoff wie auch das Aussenrohr zum Schutz der Isolationsschicht aus Kunststoff ist, wobei sich auch gezeigt hat, dass eine weitere vorteilhafte Ausgestaltung des Aussenrohr aus Metall ist. Die Isolationsschicht ist vorzugsweise ein geschäumter Kunststoff.

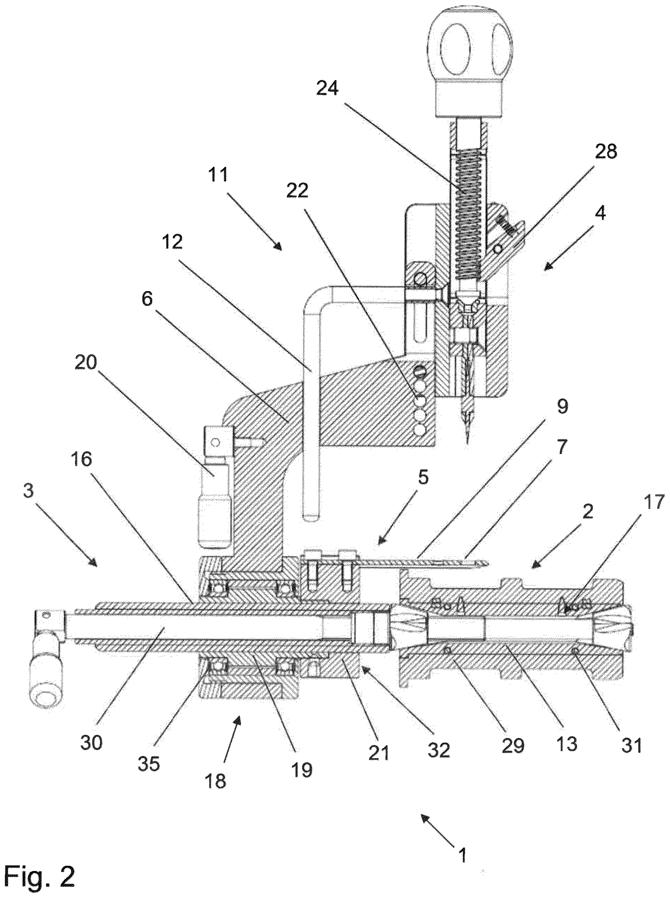

Das Schäl- und Schneidwerkzeug 1 beinhaltet eine Spanneinheit 2, welche der Aufnahme des Mediumrohres 27 dient. Durch eine Spannung des Rohrendes am Mediumsrohr 27 ist gewährleistet, dass der Abisolier-, Schäl-, und Schneidvorgang konzentrisch zum Mediumsrohr 27 erfolgt, was wesentlich ist damit das Mediumsrohr 27 nicht beschädigt wird. Ebenso beinhaltet das Werkzeug 1 eine Führungseinheit 3 unteranderem zur Vorschubbewegung der Abisolier- und Schäleinheit 5, wobei die Vorschubbewegung durch den Träger 6 initiiert wird indem der Träger 6 um die Spindel bzw. Spindelhülse des Vorschubbereichs 16 der Führungseinheit 3 rotiert wird. Der Träger 6 ist als eine Art Arm mit Lagerung 18 ausgebildet, was gut aus Fig. 2 ersichtlich ist. Der Träger 6 weist eine Spindelmutter 19 auf, die durch die Rotation des Trägers 6 an der Spindel bzw. im Vorschubbereich 16 der Führungseinheit 3 bewegbar ist. Auf der Spindelmutter 19 angeordnet ist die Abisolier- und Schäleinheit 5, welche durch blosses Aufstecken auf die Spindelmutter 19 adaptierbar und somit auch einfach auswechselbar ist. Die Abisolier- und Schäleinheit 5 ist verdrehsicher auf der Spindelmutter 19 angeordnet. Die Führungseinheit 3 erstreckt sich durch die Spanneinheit 2 wie auch durch die Lagerung 18 bzw. durch die Spindelmutter 19 im Träger 6. Die Führungseinheit 3 weist einen Vorschubbereich 16 auf, wie bereits erwähnt, der vorzugsweise als Spindel bzw. Spindelmutter ausgebildet ist. Des Weiteren weist die Führungseinheit 3 einen Spannbereich 17 auf, dieser dient dem Einspannen des Rohrendes über den Innendurchmesser des Meduimrohres 27. In Fig. 1 und 2 sind bereits durchmesserspezifische Backen 25 auf die Spannbacken 13 adaptiert worden, wobei diese Adaptierung durch Stifte wie auch magnetisch oder eine andere Weise erfolgen kann.

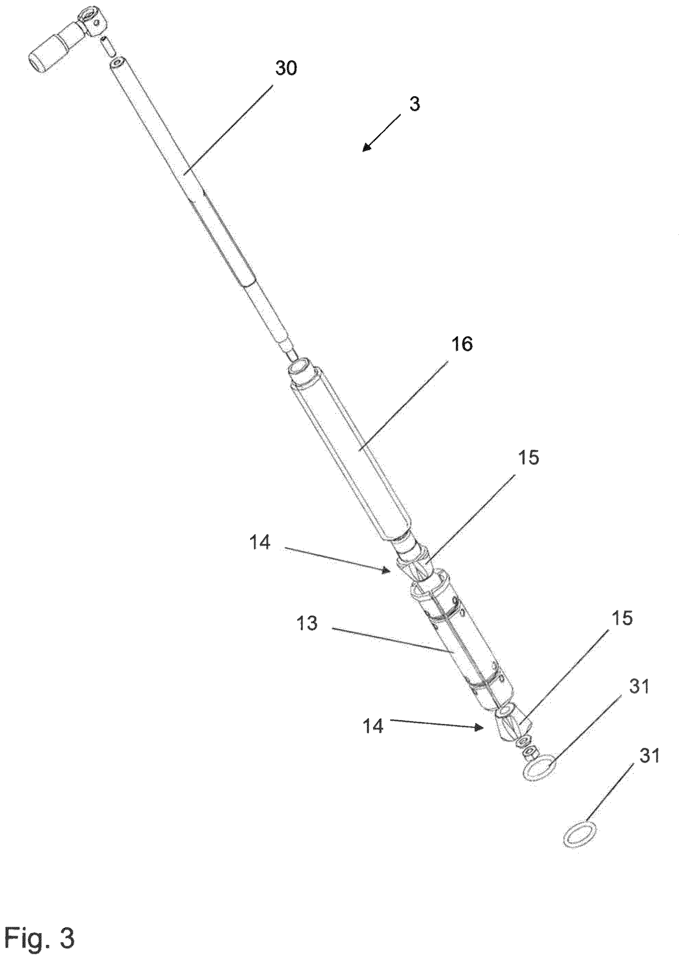

Fig. 3 zeigt die Führungseinheit 2 in einer Explosionsdarstellung, worin gut ersichtlich ist, dass vorzugsweise drei Spannbacken 13 im Spannbereich 17 der

Führungseinheit 3 angeordnet sind. Die Führungseinheit 3 weist eine Spannachse 30 auf, die sich durch den Vorschubbereich 17 bzw. die Spindelbüchse erstreckt. An der Spannachse 30 sind zwei Spannkonen 14 angeordnet, die einander entgegengesetzt ausgerichtet sind.

Zwischen den Spannkonen 14 befinden sich die Spannbacken 13, welche vorzugsweise durch Halteelemente 31 um die Spannachse 30 gehalten werden. Als Halteelemente 31 haben sich O-Ringe bewährt, wobei auch andere Halteelemente 31 denkbar sind, wichtig ist hierbei, dass sich die Spannbacken 13 bzw. der durch die Spannbacken 13 gebildete Spanndurchmesser verstellen lässt und die Spannbacken 13 gegen aussen und innen wandern können. Die Aussendurchmesserverstellung mittels den Spannbacken 13 wird dadurch erreicht, dass durch Drehen der Spannachse 30 sich die Spannkonen 14, aufgrund des Gewindes an der Spannachse 30 an dem ein Spannkonus 14 angeordnete ist, auf sich zu oder voneinander weg bewegen und dies wiederum schiebt die Spannbacken 13 auf den Spannkonen 14 hoch oder tief bzw. nach innen oder nach aussen. Selbstverständlich bewegen sich die adaptierten durchmesserspezifischen Backen 29 entsprechend mit und erlauben ein Spannen des Mediumrohres 27. Um ein gutes Anliegen der Spannbacken 13 an den Spannkonen 14 zu gewährleisten, weisen die Spannkonen 14 Konussegmente 15 auf, vorzugsweise weist ein Spannkonus 14 drei Konussegmente 15 auf, diese ermöglichen den Spannbacken 13 eine Umfangslinienauflage.

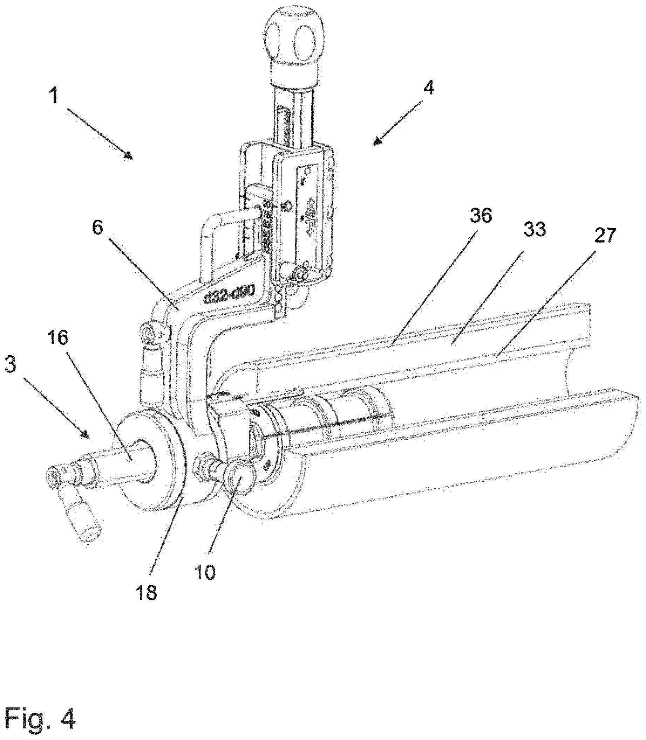

Ist nun ein Rohrende auf der Spanneinheit 2 eingespannt, wie in Fig. 4 ersichtlich, wird durch die Rotation des Trägers 6 mit Hilfe eines Handgriffs 20 eine Vorschubbewegung entlang des Vorschubbereichs 16 der Führungseinheit 3 bewirkt. Die Abisolier- und Schäleinheit 5 bewegt sich ebenfalls rotierend in Richtung Rohr bzw. im Rohr. Die Abisolier- und Schäleinheit 5 weist ein Schälelement 7, vorzugsweise eine Schälklinge und ein Abisolierelement 8 vorzugsweise eine Abisolierkontur 8 auf. Das Abisolieren und das Schälen erfolgt dementsprechend während derselben Vorschubbewegung bzw. gleichzeitig. Die Abisolier- und Schäleinheit 5 beinhaltet vorzugsweise einen Klingenhalter 21 an dem eine Klinge 9 befestigt ist, wobei das Schälelement 7 bzw. die Schälklinge und das Abisolierelement 8 bzw. die Abisolierkontur an der Klinge 9 angeordnet sind. Die Abisolierkontur 8 erstreckt sich vorzugsweise entlang des Umfangs der Klinge 9 bzw. über einen gewissen Bereich des Umfangs der Klinge 9 und ist vorzugsweise als Fase ausgebildet. Die Schälklinge 7 wird durch eine Aussparung in der Klinge 9 gebildet bzw. durch eine Kante der Aussparung in der Klinge 9. Wie bereits beschrieben ist die Abisolier- und Schäleinheit 5 durchmesserspezifisch, das heisst, dass die Abisolier- und Schäleieinheit 5 entsprechend dem abzuisolierendem Rohrende einzusetzen ist. Einerseits ist dadurch die Klinge 9 genau an der Position der äusseren Mantelfläche des Mediumrohres positioniert und andererseits ist durch die Länge der Klinge 9 und die Anschlagfläche 32 am Klingenhalter 21 die abzuisolierende Rohrlänge genau definiert, wodurch ein manuelles Abmessen überflüssig wird.

Am oberen Ende des Trägers 6 ist die Schneideinheit 4 des Schäl- und Schneidwerkzeugs 1 angeordnet, welches dem Abschneiden des Aussenrohres und der Isolationsschicht dient. Um die Schneideinheit 4 nach dem Abisolier- und Schälvorgang betätigen zu können, muss die Entriegelungseinheit 10 im Lagerbereich des Trägers 6 entriegelt werden um die Arretierung zu lösen. Die Entriegelungseinheit 10, welche durch eine Bohrung hindurch auf die Spindelmutter 19 wirkt, bewirkt die Fixierung zwischen Träger 6 und Spindelmutter 19 mit dazwischen angeordneten Lagern 35. Wird die Entriegelungseinheit 10 nun gelöst kann das Lager 35 frei drehen bzw. der Träger 6 kann sich um die stehende Spindelmutter 19 drehen. Dies ermöglicht einen Rundumschnitt um das Rohrende bzw. das Aussenrohr. Um die Schnitttiefe der Schneideinheit 4 nachzustellen damit auch die komplette Isolationsschicht durchtrennt wird, wird das Rollmesser 23 über eine Spindel 24 tiefer gestellt, wobei die Zustellung der Spindel 24 am Knauf 26 erfolgt. Da es vorteilhaft ist, wenn die Schneideinheit 4 während des Abisolier-und Schälvorgangs etwas weiter vom Rohrende beabstandet ist und die Zustellung der Schneideinheit 4 an eine rohrnähere Position nicht langsam über die Spindel 24 erfolgen sondern rasch vor sich gehen soll, ist die Spindel 24 in einem Schlitten 25 angeordnet, der sich durch den Druck auf den Knauf 26 hinunter schieben lässt bis zur Ausgangsposition für das Rollmesser 23 zum Schneiden. Die weitere Zustellung über das Rollmesser 23 erfolgt dann über die Spindel 24, wobei die Zustellung während mehrerer Umdrehungen der Schneideinheit 4 um das Rohrende bzw. während des Schneidvorgangs erfolgt bis die Isolationsschicht durchtrennt ist. Die Schneideinheit 4 beinhaltet ebenso eine Zugfeder (nicht sichtbar), welche den Schlitten 25 durch Lösen der Arretierung 28 wieder in die Ausgangslage bzw. in die vom Rohr bzw. von der Spanneinheit 2 beabstandete Position bringt.

Wie bereits erwähnt ist das Schäl- und Schneidwerkzeug 1 für die unterschiedlichen Rohrdurchmesser einsetzbar und einfach umrüstbar. Neben der dimensionsspezifischen Abisolier- und Schäleinheit 5, die entsprechend auf der Spindelmutter 19 anzubringen ist, weist das Werkzeug 1 auch ein rohrdimensionsbezogenes Kodierungssystem 11 auf das Beschädigungen am Mediumsrohr 27 verhindert. Das Kodierungssystem weist einen Dimensionsbegrenzungsbügel 12 auf, der an der Schneideinheit 4 fixiert ist und die Höheneinstellung der Schneideinheit 4 aufgrund der befestigten Abisolier- und Schäleinheit vorgibt bzw. eine zu tiefe Einstellung nicht ermöglicht.

Ist bespw. eine Abisolier- und Schäleinheit 5 für ein Mediumsrohr 90mm eingebaut verhindert der Dimensionsbegrenzungsbügel 12 ein Hinunterstellen der Schneideinheit 4 am Träger 6 auf die darunter liegenden Positionsbohrungen 22 für kleiner dimensionierte Mediumsrohre, da der Dimensionsbegrenzungsbügel 12 schon vorzeitig an der Abisoler- und Schäleinheit 5 ansteht.

## Patentansprüche

1. Schäl- und Schneidwerkzeug (1) zum Abisolieren und Schälen von vorisolierten Rohrenden insbesondere eines Aussendurchmessers eines Mediumrohres (27) beinhaltend eine Spanneinheit (2) zur zentrischen Aufnahme des Rohrendes, eine Führungseinheit (3) zur Vorschubbewegung einer Abisolier- und Schäleinheit (5), wobei sich die Führungseinheit (3) durch die Spanneinheit (2) erstreckt, eine Schneideinheit (4) zum Abtrennen des Aussenrohres und der Isolationsschicht, einen Träger (6) und eine Abisolier-und Schäleinheit (5), wobei die Abisolier- und Schäleinheit (5) ein Schälelement (7) vorzugsweise eine Schälklinge und ein Abisolierelement (8) vorzugsweise eine Abisolierkontur aufweist zum gleichzeitigen Abisolieren und Schälen des Rohrendes insbesondere des Mediumrohrendes, wobei das Schäl- und Schneidwerkzeug (1) eine Entriegelungseinheit (10) aufweist, und **dadurch gekennzeichnet, dass** das Entriegeln der Entriegelungseinheit (10) die Betätigung der Schneideinheit (4) ermöglicht, wobei der Träger (6) des Werkzeugs (1) die einzelnen Einheiten, Spanneinheit (2), Führungseinheit (3), Schneideinheit (4) und Abisolier- und Schäleinheit (5) miteinander verbindet.

2. Schäl- und Schneidwerkzeug (1) nach Anspruch 1, **dadurch gekennzeichnet, dass** das Schälelement (7) und das Abisolierelement (8) an einer Klinge (9) angeordnete sind, vorzugsweise an derselben.

3. Schäl- und Schneidwerkzeug (1) nach einem der Ansprüche 1 oder 2, **dadurch gekennzeichnet, dass** das Schäl- und Schneidwerkzeug (1) ein rohrdimensionsbezogenes Kodierungssystem (11) aufweist, wobei das Kodierungssystem (11) zum Vermeiden von Fehlern bezüglich falsch eingestelltem Schäl- und Schneidwerkzeug (1) dient.

4. Schäl- und Schneidwerkzeug (1) nach Anspruch 3, **dadurch gekennzeichnet, dass** das Kodierungssystem (11) einen Dimensionsbegrenzungsbügel (12) aufweist.

5. Schäl- und Schneidwerkzeug (1) nach einem der vorangehenden Ansprüche, **dadurch gekennzeichnet, dass** die Spanneinheit (2) Spannbacken (13) aufweist, vorzugsweise drei.

6. Schäl- und Schneidwerkzeug (1) nach einem der vorangehenden Ansprüche, **dadurch gekennzeichnet, dass** die Spanneinheit (2) Spannkonen (14) aufweist.

7. Schäl- und Schneidwerkzeug (1) nach Anspruch 6, **dadurch gekennzeichnet, dass** die Spannkonen (14) aus mindestens zwei, vorzugsweise drei Konussegmente (15) gebildet sind, wobei derer Mittelpunkte regelmässig auf einem Kreis angeordnet sind.

8. Schäl- und Schneidwerkzeug (1) nach einem der vorangehenden Ansprüche, **dadurch gekennzeichnet, dass** die Führungseinheit (3) einen Vorschubbereich (16) zum Abisolieren und Schälen des Rohrendes und einen Spannbereich (17) zum Spannen der Spanneinheit (2) aufweist, wobei der Vorschubbereich (16) und der Spannbereich (17) vorzugsweise koaxial hintereinander angeordnet sind.

9. Schäl- und Schneidwerkzeug (1) nach einem der vorangehenden Ansprüche, **dadurch gekennzeichnet, dass** der Träger (6) eine Lagerung (18) aufweist.

10. Verfahren zum Abisolieren und Schälen eines vorisolierten Rohrendes mittels Schäl- und Schneidwerkzeug (1) nach Anspruch 1, **dadurch gekennzeichnet, dass** ein Abisolieren und Schälen des Mediumrohres (27) während derselben Vorschubbewegung der Abisolier- und Schäleinheit (5) erfolgt.

11. Verfahren nach Anspruch 11, **dadurch gekennzeichnet, dass** das Durchtrennen des aussenliegenden Schutzrohres und der Isolationsschicht nach dem Abisolieren und Schälen des Mediumrohres (27) erfolgt.

## Claims

1. Paring and cutting tool (1) for the stripping and paring of pre-insulated pipe ends, in particular of an outside diameter of a medium-conveying pipe (27), comprising a clamping unit (2) for the centric reception of the pipe end, a guide unit (3) for the feed movement of a stripping and paring unit (5), wherein the guide unit (3) extends through the clamping unit (2), a cutting unit (4) for separating the outer pipe and the insulating layer, a carrier (6) and a stripping and paring unit (5), wherein the stripping and paring unit (5) has a paring element (7), preferably a paring blade, and a stripping element (8), preferably a stripping contour, for the simultaneous stripping and paring of the pipe end, in particular of the medium-conveying pipe end, wherein the paring and cutting tool (1) has an unlocking unit (10), and **characterized in that** the unlocking of the unlocking unit (10) enables the actuation of the cutting unit (4), wherein the carrier (6) of the tool (1) connects the individual units, clamping unit (2), guide unit (3), cutting unit (4) and stripping and paring unit (5) to one another.

2. Paring and cutting tool (1) according to Claim 1, **characterized in that** the paring element (7) and the stripping element (8) are arranged on a blade (9), preferably on the same blade.

3. Paring and cutting tool (1) according to one of Claims 1 or 2, **characterized in that** the paring and cutting tool (1) has a pipe-dimension-related coding system (11), wherein the coding system (11) serves to avoid errors with respect to an incorrectly adjusted paring and cutting tool (1).

4. Paring and cutting tool (1) according to Claim 3, **characterized in that** the coding system (11) has a dimension-limiting bracket (12).

5. Paring and cutting tool (1) according to one of the preceding claims, **characterized in that** the clamping unit (2) has clamping jaws (13), preferably three.

6. Paring and cutting tool (1) according to one of the preceding claims, **characterized in that** the clamping unit (2) has clamping cones (14).

7. Paring and cutting tool (1) according to Claim 6, **characterized in that** the clamping cones (14) are formed of at least two, preferably three cone segments (15), wherein their centre points are arranged regularly on a circle.

8. Paring and cutting tool (1) according to one of the preceding claims, **characterized in that** the guide unit (3) has a feed region (16) for the stripping and paring of the pipe end and a clamping region (17) for the clamping of the clamping unit (2), wherein the feed region (16) and the clamping region (17) are preferably arranged coaxially one behind the other.

9. Paring and cutting tool (1) according to one of the preceding claims, **characterized in that** the carrier (6) has a mounting (18).

10. Method for stripping and paring a pre-insulated pipe end by means of a paring and cutting tool (1) according to Claim 1, **characterized in that** a stripping and paring of the medium-conveying pipe (27) takes place during the same feed movement of the stripping and paring unit (5).

11. Method according to Claim 11, **characterized in that** the outer protective pipe and the insulating layer are cut through after the stripping and paring of the medium-conveying pipe (27).

## Revendications

1. Outil d'écroûtage et de coupe (1) destiné à dénuder et écroûter des extrémités de tubes pré-isolées, en particulier un diamètre extérieur d'un tube de milieu (27) contenant une unité de serrage (2) destinée à recevoir centralement l'extrémité de tube, une unité de guidage (3) destinée à faire avancer une unité de dénudage et d'écroûtage (5), l'unité de guidage (3) s'étendant à travers l'unité de serrage (2), une unité de coupe (4) destinée à séparer le tube extérieur et la couche isolante, un support (6) et une unité de dénudage et d'écroûtage (5), l'unité de dénudage et d'écroûtage (5) comportant un élément d'écroûtage (7), de préférence une lame d'écroûtage, et un élément de dénudage (8), de préférence un contour de dénudage, destiné à dénuder et écroûter simultanément l'extrémité de tube, en particulier l'extrémité de tube de milieu, l'outil d'écroûtage et de coupe (1) comportant une unité de déverrouillage (10), et **caractérisé en ce que** le déverrouillage de l'unité de déverrouillage (10) permet d'actionner l'unité de coupe (4), le support (6) de l'outil (1) reliant les unités individuelles, l'unité de serrage (2), l'unité de guidage (3), l'unité de coupe (4) et l'unité de dénudage et d'écroûtage (5) les unes aux autres.

2. Outil d'écroûtage et de coupe (1) selon la revendication 1, **caractérisé en ce que** l'élément d'écroûtage (7) et l'élément de dénudage (8) sont disposés sur une lame (9), de préférence sur la même.

3. Outil d'écroûtage et de coupe (1) selon l'une des revendications 1 ou 2, **caractérisé en ce que** l'outil d'écroûtage et de coupe (1) comporte un système de codage (11) lié aux dimensions des tubes, le système de codage (11) servant à éviter des erreurs liées à des outils d'écroûtage et de coupe (1) mal réglés.

4. Outil d'écroûtage et de coupe (1) selon la revendication 3, **caractérisé en ce que** le système de codage (11) comporte un étrier de limitation de dimensions (12).

5. Outil d'écroûtage et de coupe (1) selon l'une des revendications précédentes, **caractérisé en ce que** l'unité de serrage (2) comporte des mâchoires de serrage (13), de préférence trois.

6. Outil d'écroûtage et de coupe (1) selon l'une des revendications précédentes, **caractérisé en ce que** l'unité de serrage (2) comporte des cônes de serrage (14).

7. Outil d'écroûtage et de coupe (1) selon la revendication 6, **caractérisé en ce que** les cônes de serrage (14) sont formés d'au moins deux, de préférence trois, segments de cône (15), leurs centres étant disposés régulièrement sur un cercle.

8. Outil d'écroûtage et de coupe (1) selon l'une des revendications précédentes, **caractérisé en ce que** l'unité de guidage (3) comporte une zone d'avancement (16) destinée au dénudage et à l'écroûtage de l'extrémité de tube et une zone de serrage (17) destinée au serrage de l'unité de serrage (2), la zone d'avancement (16) et la zone de serrage (17) étant de préférence disposées coaxialement l'une derrière l'autre.

9. Outil d'écroûtage et de coupe (1) selon l'une des revendications précédentes, **caractérisé en ce que** le support (6) comporte un palier (18).

10. Procédé de dénudage et d'écroûtage d'une extrémité de tube pré-isolée à l'aide d'un outil d'écroûtage et de coupe (1) selon la revendication 1, **caractérisé en ce que** le dénudage et l'écroûtage du tube de milieu (27) sont effectués pendant le même mouvement d'avancement de l'unité de dénudage et d'écroûtage (5).

11. Procédé selon la revendication 11, **caractérisé en ce que** le tube de protection extérieur et la couche isolante sont sectionnés après que le tube de milieu (27) a été dénudé et écroûté.
